# EUROPEAN PATENT APPLICATION

(11) **EP 3 163 284 A1**
(43) Date of publication of application: **03.05.2017**
(21) Application number: 15812733.2
(22) Date of filing: 25.06.2015
(51) Int. Cl.: G01N 1/36, C08L 3/00, C08L 89/04, G01N 1/28, G01N 33/48

(54) **EMBEDDING MEDIUM FOR SPECIMEN PREPARATION, METHOD FOR PREPARING CURABLE BASE MATERIAL NON-PENETRATING SPECIMEN, METHOD FOR PREPARING CURABLE BASE MATERIAL PENETRATING SPECIMEN, CURABLE BASE MATERIAL NON-PENETRATING SPECIMEN, THIN-SLICE-PERFORMANCE IMPROVER FOR FROZEN EMBEDDING MEDIUM, AND FROZEN EMBEDDING MEDIUM**

(30) Priority: 27.06.2014 JP 2014132569; 12.12.2014 JP 2014251912
(71) Applicant: National University Corporation Nagoya University, Aichi 464-8601 (JP)
(72) Inventor: USHIDA Kaori, Nagoya-shi Aichi 464-8601 (JP); ASAI Naoya, Nagoya-shi Aichi 464-8601 (JP); TAKAHASHI Masahide, Nagoya-shi Aichi 464-8601 (JP)
(74) Representative: Cabinet Plasseraud
(86) International application number: PCT/JP2015/068402
(87) International publication number: WO 2015/199195

(57) **Abstract**

Provided is an embedding medium for specimen preparation that, when preparing a curable base material nonpenetrating specimen, involves no thermal invasion of the tissue, minimizes wrinkling and tearing during thin slicing, and makes it possible to confirm the position of the tissue in the embedding medium, and also for preparing a curable base material penetrating specimen on the same plane as a curable base material nonpenetrating specimen.

The problem can be solved by using an embedding medium for specimen preparation that includes gelatin that is in a liquid state at 15°C-25°C and assumes a solid state at 4°C when made into an aqueous solution.

## Description

### TECHNICAL FIELD

The invention relates to an embedding medium for specimen preparation, a method for preparing a curable base material nonpenetrating specimen, a method for preparing a curable base material penetrating specimen, a curable base material nonpenetrating specimen, a thin slice performance improver for frozen embedding medium, and a frozen embedding medium. In particular, it relates to a method for preparing a curable base material nonpenetrating specimen that does not thermally invade the tissue, has high operability at room temperature, and does not generate wrinkles or tears through the use of a low melting-point gelatin that is in a liquid state at room temperature and assumes a solid state at 4°C when made into an aqueous solution, and to a curable base material nonpenetrating specimen prepared by this method. It also relates to a method for preparing a curable base material penetrating specimen that makes it possible to prepare a curable base material penetrating specimen on the same plane as a curable base material nonpenetrating specimen when preparing a curable base material penetrating specimen from a frozen block used in the preparation of a curable base material nonpenetrating specimen. In addition, it relates to a thin slice performance improver of a frozen embedding medium containing low melting-point gelatin that makes it possible to improve the thin slice performance of a frozen block by being used in combination with a conventional frozen embedding medium, and to a frozen embedding medium.

### TECHNICAL BACKGROUND

There has been a demand in recent years in the medical care field to collect tissue during surgery and to rapidly test whether it is benign or malignant or whether there has been invasion of the resected margin or metastasis to the lymph nodes. Testing during surgery allows one to change the operative procedure and appropriately decide the range of resection during surgery, and can improve the accuracy of the surgery.

Frozen tissue specimens are generally prepared, due to their excellent rapidity and retention of antigenicity, and examined by microscope for testing of tissues during surgery. Frozen tissue specimens can be prepared by embedding a collected tissue in a frozen embedding medium → freezing at -20°C or lower → slicing thinly → staining. Media that use polyvinyl alcohol (PVA), polyethylene glycol (PEG), and other such polymers are known as frozen embedding media, and marketed as frozen embedding media.

### (Problem 1: Wrinkling, tearing, and peeling of frozen embedded specimens)

However, wrinkles, tears, and the like tend to develop when thin-slicing frozen blocks prepared using commercial frozen embedding media, and it is sometimes difficult to obtain a clean thin film (section). In particular, O.C.T. compound is used as a frozen embedding medium in many hospitals and research facilities. The problem is that thin slicing is difficult when the tissue is poorly compatible with the O.C.T. compound. In addition, frozen tissue specimens are prepared with the thinly sliced tissue bonded to a slide glass. The problem is that they tend to peel from the slide glass when a conventional frozen embedding medium is used.

Adjustments to the embedding method and temperature, sucrose substitution, use of bonding film, pre-embedding using agarose, and the like are known as solutions to the above problems. However, the problem is that these methods cause thermal invasion and wrinkling and tearing when slicing thinly, and it takes time to prepare the frozen tissue specimen. This poses a problem when used as a test method for tissues collected during surgery.

### (Problem 2: O.C.T. compound is difficult to handle during frozen embedding since it does not become a translucent solid at around 4°C)

Additionally, since commercial frozen embedding media become opaque when frozen, the problem is that it becomes difficult to confirm the orientation of the embedded tissue. The position of the collected tissue sometimes shifts during freezing since the frozen embedding medium is fluid in a liquid state from room temperature up to near the freezing temperature. As a result, the problem is that it is difficult to confirm from the outside whether the embedded tissue has maintained the desired orientation in the frozen embedding medium after freezing when a conventional frozen embedding medium is used, and that it is difficult to adjust the section plane of the tissue to the desired plane.

### (Problem 3: O.C.T. compound melts and flows into the formalin fixing solution and is difficult to handle when preparing paraffin embedding from frozen embedding)

The above frozen tissue specimens are used in rapid pathological diagnoses in hospitals and the like, and are not fixed by formalin or the like. The problem therefore is that the tissue breaks down when stored for an extended period of time after pathological diagnosis. To solve this problem, the tissue from a frozen block used to prepare a frozen tissue specimen is sometimes fixed by formalin so that it does not break down, and a permanent paraffin specimen embedded in paraffin, which is a curable base material, is prepared. The problem, however, is that conventional frozen embedding media flow and fall into the formalin fixing solution when the frozen block is immersed in formalin fixing solution during the process of preparing a paraffin specimen. The problem is that the tissue therefore floats in the formalin fixing solution, making it difficult to prepare a paraffin specimen on the same plane as the thin slice plane where the frozen tissue specimen was prepared. No frozen embedding media capable of solving the above problems encountered when preparing frozen tissue specimens and paraffin specimens are currently known.

### (Problem 4: Agarose poses problems of thermal invasion and compatibility in pre-embedding)

When preparing specimens of tissue fixed directly from the tissue by formalin fixing solution without frozen embedding and paraffin specimens, the problem is that the position and orientation in the formalin fixing solution are indeterminate and the tissue falls apart in the case of organs having weak mutual connections of the constituent tissues, the gastrointestinal tract, cytological specimens, and the like. Pre-embedding is therefore sometimes performed to preliminarily embed the specimen tissue by agarose prior to formalin fixation. The problem, however, is that the melting point of agarose in the concentration used in pre-embedding is 60°C or higher, heat invasion of the tissue is a concern, and a quick operation is required. Poor compatibility with the tissue also makes separation a problem.

### (Problem 5: Common gelatin is not suitable as an embedding medium)

Mainly bovine and porcine gelatin (melting point about 30°C) has been used as a culture medium, binding material, and coating material in the field of life sciences research. The use of gelatin as an embedding medium for preparation of tissue specimens is also known (Patent Documents 1 and 2).

### (Problem 6: Common frozen embedding media are not suitable for the preparation of frozen specimens of adipose tissues)

Lymph nodes buried in adipose tissue, mammary glands surrounded by adipose tissue, liposarcoma, and other such specimens are sometimes submitted for rapid diagnosis during surgery. However, since adipose tissue does not freeze at -20°C, thin slicing after cooling to around -35°C is sometimes necessary when preparing frozen specimens of adipose tissues. However, the frozen embedding medium and tissues other than fats solidify and become brittle, making uniform slicing difficult, when the temperature is lowered to -35°C when using a common frozen embedding medium. Problems such as separation of the adipose tissue and frozen embedding medium tend to occur, and it is often difficult to obtain clean sections. Frozen embedding media for adipose tissues having a surfactant added are also known, but the addition of a surfactant negatively affects staining, and is thus undesirable.

### PRIOR ARTS LIST

### [Patent Documents]

Patent Document 1: Japanese Unexamined Patent Application Publication No. 2004-347594
Patent Document 2: Japanese Unexamined Patent Application Publication No. 2013-29436

### SUMMARY OF THE INVENTION

### PROBLEMS TO BE SOLVED BY THE INVENTION

As discussed above, gelatin is known to be used as an embedding medium. However, since gelatin is in a solid state at room temperature at the concentration actually used (1 wt% or higher), operation at a temperature higher than room temperature is sometimes necessary when it is used as an embedding medium to prepare tissue specimens. In addition, Patent Document 1 only discloses that gelatin can be used in the same way as water, paraffin, celloidin, carbon wax, albumin, agarose, epoxy resin, polyester resin, and glycol methacrylate; there are no examples using gelatin, and there is no mention of its ability to solve the above problems of the prior art. In Patent Document 2, gelatin is used as an embedding medium for frozen materials fixed by a mixed solution of formalin-ethanol. As in Patent Document 1, there is no mention of its ability to solve the above problems of the prior art.

The present invention is intended to solve the above conventional problems. It was discovered upon in-depth research that there is no thermal invasion of the tissue and wrinkling and tearing are minimized during preparation of a curable substrate nonpenetrating specimen when an embedding medium for specimen preparation (sometimes referred to simply hereinafter as "embedding medium") containing as an ingredient gelatin that is in a liquid state at room temperature and assumes a solid state at 4°C when made into an aqueous solution (sometimes referred to hereinafter as "low melting-point gelatin") is used. It was also newly discovered that, since the embedding medium is in a liquid state at room temperature, the tissue embedding operation is facilitated and the position and orientation of the tissue can be determined easily during freezing by permitting operation while confirming the position of the tissue in the translucent embedding medium that has cooled and solidified at around 4°C.

In addition, a block prepared using the embedding medium can be fixed while maintaining a jelly-like form when the tissue is fixed by a fixing solution (around 4°C). The fixed block is in a solid state even when returned to room temperature, and can be thinly sliced as a curable base material nonpenetrating specimen and used in tissue examination. Also, it was newly discovered that, since fixed gelatin that embeds a tissue can be held by tweezers or the like, a block can be prepared by paraffin or another such curable base material while adjusting the position without damaging the tissue, a curable base material penetrating specimen can be prepared on the same plane as a curable base material nonpenetrating specimen, and the thin slice performance can be improved by adding low melting-point gelatin to a conventional frozen embedding medium.

In addition, it was newly discovered that, when a carboxylic acid compound is added to the embedding medium of the present invention, the thin slice performance of the frozen block is improved even when cooled to the temperature at which adipose tissue freezes, and gelatin + known frozen embedding medium turns white at a stage prior to freezing, but the transparency is improved by the addition of a carboxylic acid compound. The present invention was completed based on these new findings.

Specifically, an object of the present invention is to provide an embedding medium for specimen preparation, a method for preparing a curable base material nonpenetrating specimen, a method for preparing a curable base material penetrating specimen, a curable base material nonpenetrating specimen, a thin slice performance improver for frozen embedding medium, and a frozen embedding medium.

### MEANS TO SOLVE THE PROBLEMS

The present invention relates to an embedding medium for specimen preparation, a method for preparing a curable base material nonpenetrating specimen, a method for preparing a curable base material penetrating specimen, a curable base material nonpenetrating specimen, a thin slice performance improver for frozen embedding medium, and a frozen embedding medium, as shown below.

(1) An embedding medium for specimen preparation including gelatin that is in a liquid state at 15°C-25°C and assumes a solid state at 4°C when made into an aqueous solution.
(2) The embedding medium for specimen preparation according to (1) above wherein the gelatin is derived from fish.
(3) The embedding medium for specimen preparation according to (1) or (2) above including at least one water-soluble substance selected from the group comprising gelatin hydrolysates, amino acids and salts thereof, sugars, processed starches, sorbitan fatty acid esters, and sucrose fatty acid esters.
(4) The embedding medium for specimen preparation according to (3) above wherein the water-soluble substance includes at least sugars.
(5) The embedding medium for specimen preparation according to (3) above wherein the water-soluble substance is agarose.
(6) The embedding medium for specimen preparation according to (3) above wherein the water-soluble substance is dextrin.
(7) The embedding medium for specimen preparation according to any of (1)-(6) above that also includes a frozen embedding medium.
(8) The embedding medium for specimen preparation according to any of (1)-(7) above that also includes a carboxylic acid compound.
(9) A method for preparing a curable base material nonpenetrating specimen including:
   a step for embedding a tissue using the embedding medium for specimen preparation according to any of (1)-(8) above,
   a step for preparing a frozen block by freezing the tissue embedded using the embedding medium for specimen preparation, and
   a step for thin-slicing the frozen block and obtaining a support to which the thinly sliced tissue is affixed.
(10) The method for preparing a curable base material nonpenetrating specimen according to (9) above that includes a staining step for staining the tissue after the step for obtaining a support to which the thinly sliced tissue is affixed.
(11) A method for preparing a curable base material nonpenetrating specimen including:
   a step for embedding a tissue using the embedding medium for specimen preparation according to any of (1)-(8) above,
   a step for preparing a solidified block by cooling a tissue embedded using the embedding medium for specimen preparation,
   a step for preparing a fixed block by immersing the block in a fixing solution,
   a step for thin-slicing the fixed block and obtaining a support to which the thinly sliced tissue is affixed.
(12) The method for preparing a curable base material nonpenetrating specimen according to (11) above that includes a staining step for staining the tissue after the step for thin-slicing the fixed block and obtaining a support to which the thinly sliced tissue is affixed.
(13) A method for preparing a curable base material penetrating specimen including:
   a step for embedding a tissue using the embedding medium for specimen preparation according to any of (1)-(8) above,
   a step for preparing a solidified block by cooling the tissue embedded using the embedding medium for specimen preparation,
   a step for preparing a fixed block by immersing the block in a fixing solution,
   a step for preparing a curable base material block having the fixed block embedded using a curable base material,
   a step for thin-slicing the curable base material block and obtaining a support to which the thinly sliced tissue is affixed.
(14) The method for preparing a curable base material penetrating specimen according to (13) above that includes a staining step for staining the tissue after the step for thin-slicing the curable base material block and obtaining a support to which the thinly sliced tissue is affixed.
(15) The method for preparing a curable base material penetrating specimen according to (13) or (14) above wherein the block is a frozen block prepared when preparing a curable base material nonpenetrating specimen.
(16) The method for preparing a curable base material penetrating specimen according to any of (13)-(15) above wherein the step for preparing a curable base material block having the fixed block embedded using a curable base material prepares a curable base material block by cooling the curable base material while adjusting the position of the fixed block in the melted curable base material.
(17) A curable base material nonpenetrating specimen including gelatin that is in a liquid state at 15°C-25°C and assumes a solid state at 4°C when made into an aqueous solution.
(18) A thin slice performance improver for a frozen embedding medium that includes gelatin that is in a liquid state at 15°C-25°C and assumes a solid state at 4°C when made into an aqueous solution.
(19) The thin slice performance improver according to (18) above that also includes a carboxylic acid compound.
(20) A frozen embedding medium that includes the thin slice performance improver according to (18) or (19) above.

### ADVANTAGEOUS EFFECTS OF THE INVENTION

Since the embedding medium of the present invention has gelatin that is in a liquid state at room temperature and assumes a solid state at 4°C as an ingredient, it allows embedding without subjecting the tissue to any damage due to thermal invasion during the embedding step. Additionally, since the embedding medium can be washed away by water after affixing the tissue to a support, there will be little stained background.

Since the embedding medium of the present invention gradually forms into a gel by lowering the temperature via ice cooling or the like during embedding of a tissue specimen, the piece of tissue is easier to adjust than with conventional frozen embedding media that are fluid even near the ice cooling temperature.

A protein derived from an animal is the main component of the gelatin of the embedding medium of the present invention. Since the compatibility with tissues therefore improves, unlike PVA, PEG, and other such polymers, a curable base material nonpenetrating specimen with little wrinkling or tearing can be prepared. In addition, since gelatin is adhesive, the tissue is less likely to peel after the thinly sliced tissue has been affixed to the slide glass. There is also no biohazard problem when gelatin from fish is used as the gelatin.

Since the main component of the gelatin of the embedding medium of the present invention is a protein, the gelatin is also fixed by the fixing solution together with the tissue when immersed in a state with the tissue embedded in a fixing solution such as formalin. The vicinity of the fixed tissue is therefore covered by fixed gelatin by placing the block in the fixing solution at a temperature at which the low melting-point gelatin maintains a gel state. Since the fixed gelatin can be picked up and the position adjusted during block preparation of a curable base material such as paraffin, there is no damage to the tissue, and a curable base material penetrating specimen can be prepared on the same plane as a curable base material nonpenetrating specimen.

The thin slice performance improver for frozen embedding medium of the present invention can improve the thin slice performance of a frozen block by being added to a conventional frozen embedding medium. Therefore, it can be provided separately as a thin slice performance improver for frozen embedding media marketed in the past, and can also be provided as a frozen embedding medium containing a thin slice performance improver.

Addition of a carboxylic acid compound to the embedding medium of the present invention can also improve the thin slice performance of frozen sections even when the temperature of the frozen block is lowered to a temperature at which adipose tissue freezes. Since the embedding medium can therefore be used for both adipose tissue and non-adipose tissues even with no surfactant or the like added, there is no need to switch embedding media in accordance with the tissue. The transparency of the embedding medium also improves when a carboxylic acid compound is added to gelatin + known frozen embedding medium. This makes it possible to easily confirm the position of the tissue when preparing a curable base material nonpenetrating specimen.

### BRIEF DESCRIPTION OF THE DRAWINGS

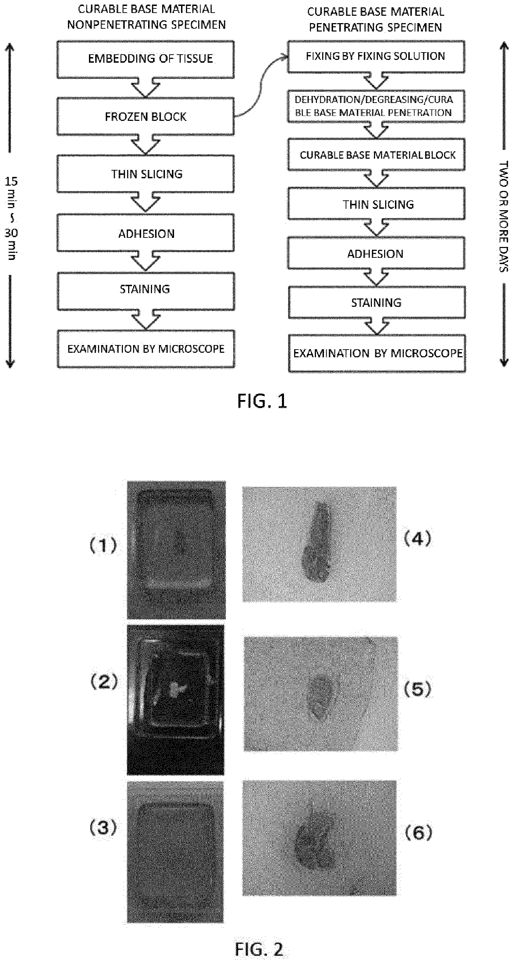

FIG. 1 is a flow chart showing an example of the preparation and pathology test procedure for a curable base material nonpenetrating specimen and curable base material penetrating specimen of the present invention;
FIG. 2 shows a photograph substituted for a drawing. FIG. 2(1) shows a photograph of an unfrozen block of Example 1. FIG. 2(2) shows a photograph of an unfrozen block of Comparative Example 1. FIG. 2(3) shows a photograph of an unfrozen block of Comparative Example 2. FIG. 2(4) shows a photograph of a curable base material nonpenetrating specimen of Example 1 after HE staining. FIG. 2(5) shows a photograph of a curable base material nonpenetrating specimen of Comparative Example 1 after HE staining. FIG. 2(6) shows a photograph of a curable base material nonpenetrating specimen of Comparative Example 2 after HE staining;

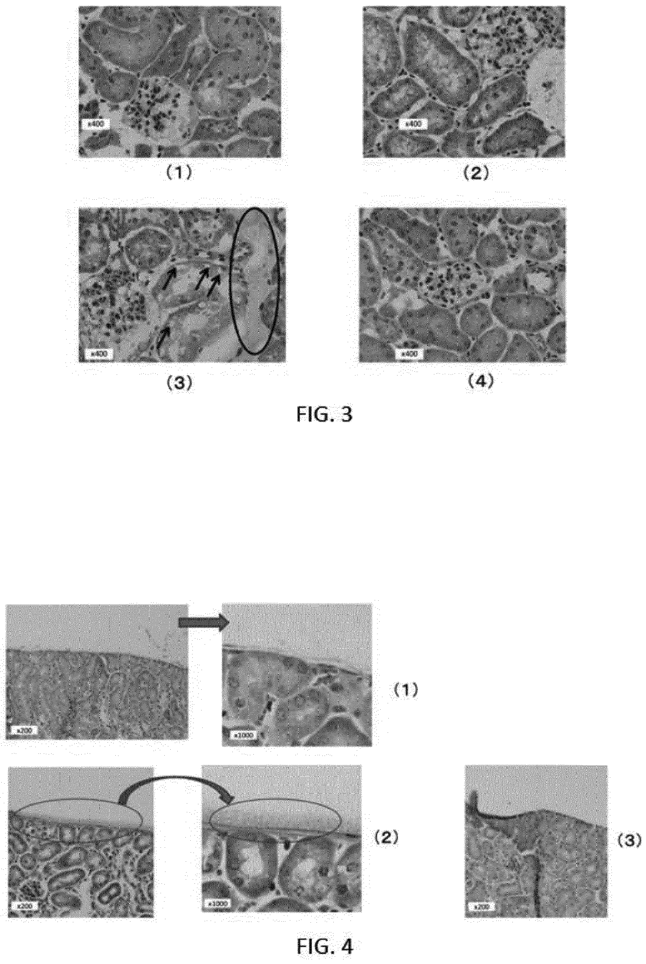

FIG. 3 shows a photograph substituted for a drawing. FIG. 3(1) is a 400× enlarged photograph of a curable base material nonpenetrating specimen after HE staining prepared in Example 2. FIG. 3(2) is a 400× enlarged photograph of a curable base material nonpenetrating specimen after HE staining prepared in Example 3. FIG. 3(3) is a 400× enlarged photograph of a curable base material nonpenetrating specimen after HE staining prepared in Comparative Example 3. FIG. 3(4) is a 400× enlarged photograph of a curable base material nonpenetrating specimen after HE staining prepared in Comparative Example 4;
FIG. 4 shows a photograph substituted for a drawing. FIG. 4(1) is a 200× and 1000× enlarged photograph of a curable base material nonpenetrating specimen of Example 2. FIG. 4(2) is a 200× and 1000× enlarged photograph of a curable base material nonpenetrating specimen of Example 3. FIG. 4(3) is a 200× enlarged photograph of a curable base material nonpenetrating specimen of Comparative Example 4;

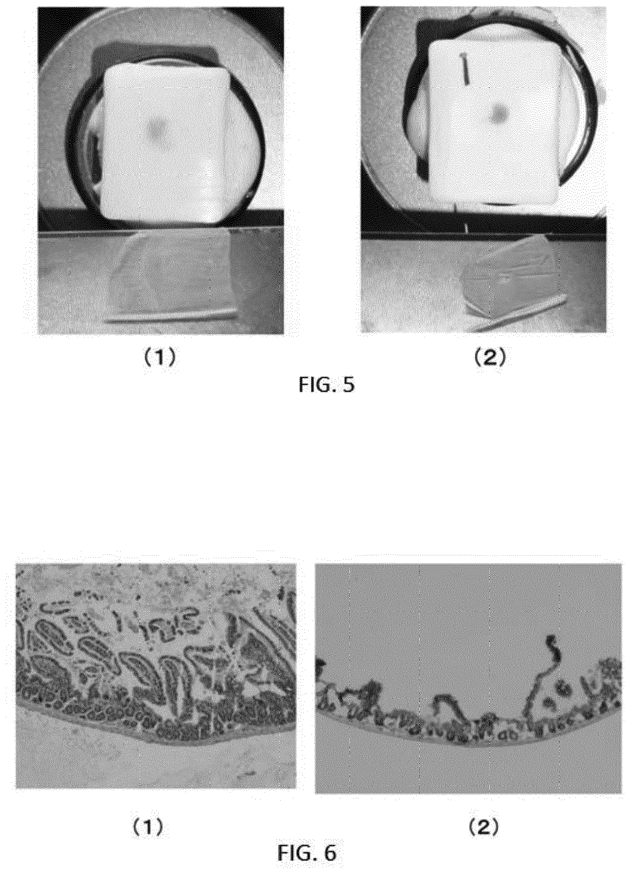

FIG. 5 shows a photograph substituted for a drawing. FIG. 5(1) shows a photograph of a thin slice section prepared in Example 4. FIG. 5(2) shows a photograph of a thin slice section prepared in Comparative Example 5;
FIG. 6 shows a photograph substituted for a drawing. FIG. 6(1) shows a photograph of a curable base material nonpenetrating specimen obtained by HE staining a thinly sliced section in Example 4. FIG. 6(2) shows a photograph of a curable base material nonpenetrating specimen obtained by HE staining a thinly sliced section in Comparative Example 5;

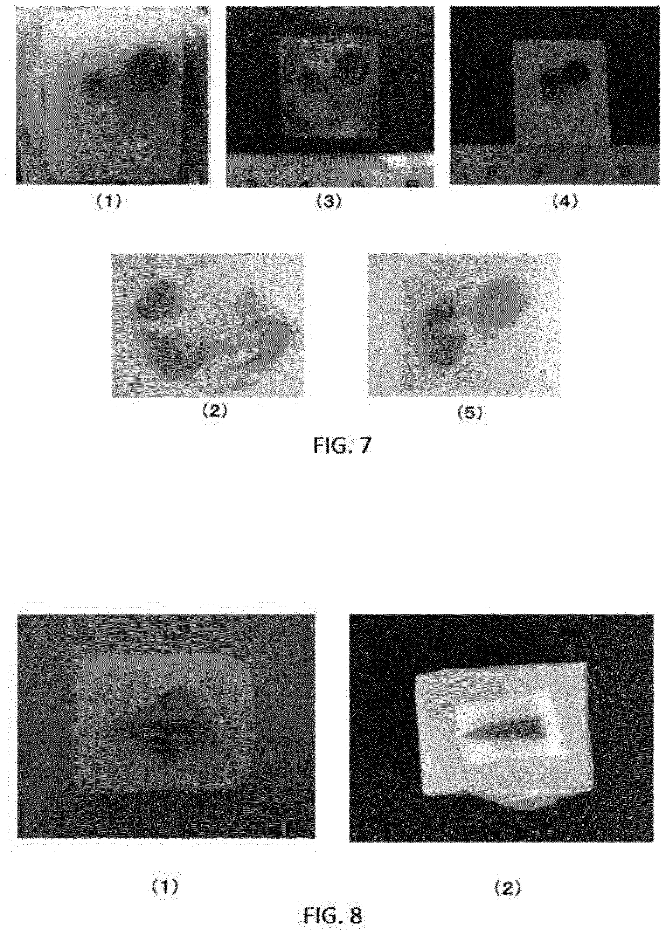

FIG. 7 shows a photograph substituted for a drawing. These are photographs taken during the curable base material penetrating specimen preparation process in Example 5. FIG. 7 (1) shows a photograph of a frozen block; FIG. 7(2) shows a photograph of an HE-stained curable base material nonpenetrating specimen; FIG. 7(3) shows a photograph of a block after formalin fixation and before paraffin embedding, photographed at room temperature; FIG. 7(4) shows a photograph of a paraffin block; FIG. 7(5) shows a photograph of an HE-stained curable base material penetrating specimen;
FIG. 8 shows a photograph substituted for a drawing. FIG. 8(1) shows a photograph of a block after formalin fixation and before paraffin embedding prepared in Example 6; FIG. 8(2) shows a photograph of a paraffin block;

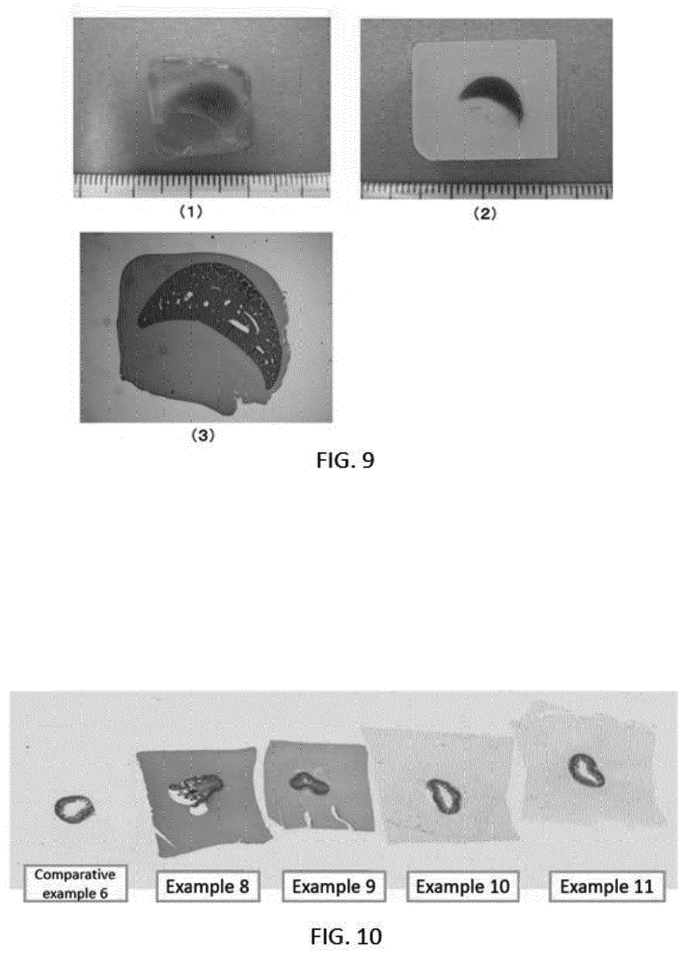

FIG. 9 shows a photograph substituted for a drawing. These are photographs taken during the curable base material penetrating specimen preparation process in Example 7. FIG. 9(1) shows a photograph taken after formalin fixation; FIG. 9(2) shows a photograph of a paraffin block; FIG. 9(3) shows a photograph of an HE-stained curable base material penetrating specimen;
FIG. 10 shows a photograph substituted for a drawing. These are photographs of HE-stained curable base material penetrating specimens prepared in Examples 8-11 and Comparative Example 6;

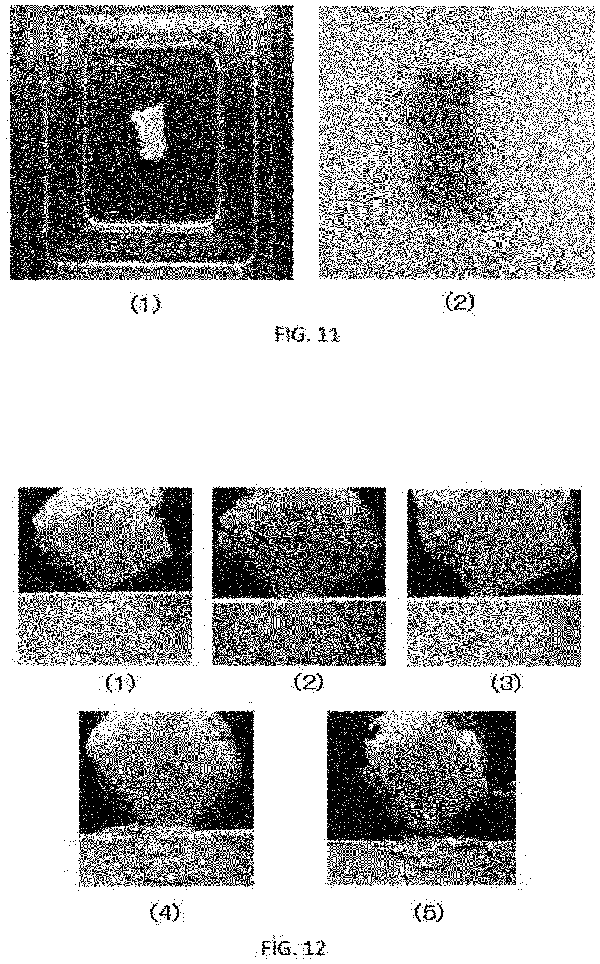

FIG. 11 shows a photograph substituted for a drawing. FIG. 11(1) shows a photograph of an unfrozen block of Example 12; FIG. 11(2) shows a photograph of a curable base material nonpenetrating specimen after HE staining;
FIG. 12 shows a photograph substituted for a drawing. FIG. 12(1) shows a photograph of a thinly sliced frozen section of Example 13; FIG. 12(2) shows a photograph of a thinly sliced frozen section of Example 14; FIG. 12(3) shows a photograph of a thinly sliced frozen section of Example 15; FIG. 12(4) shows a photograph of a thinly sliced frozen section of Comparative Example 7; FIG. 12(5) shows a photograph of a thinly sliced frozen section of Comparative Example 8;

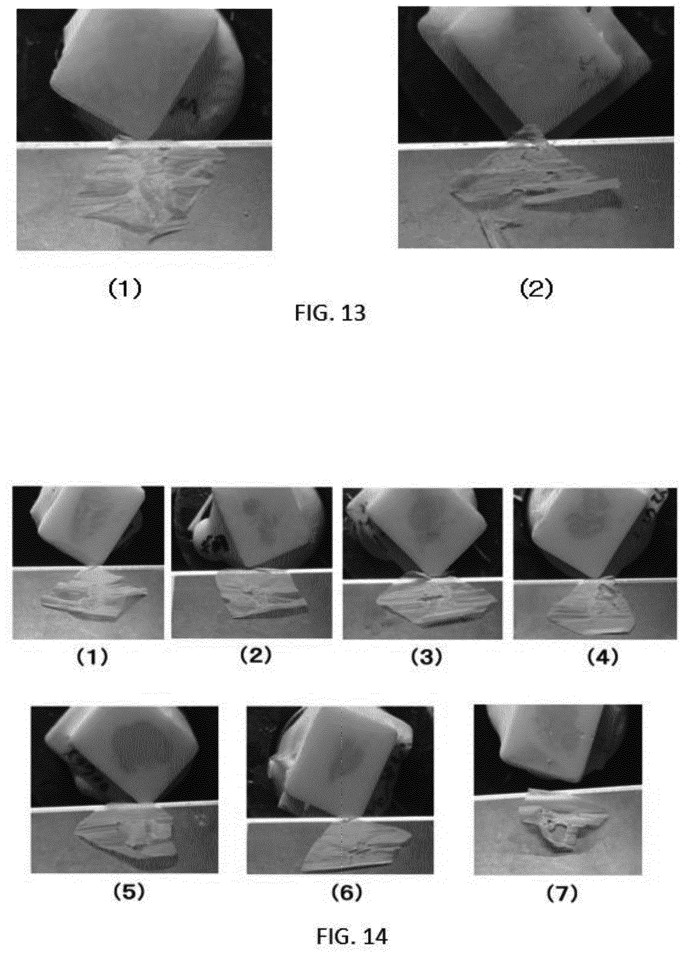

FIG. 13 shows a photograph substituted for a drawing. FIG. 13(1) shows a photograph of a thinly sliced frozen section of Example 16; FIG. 13(2) shows a photograph of a thinly sliced frozen section of Comparative Example 9;
FIG. 14 shows a photograph substituted for a drawing. FIG. 14(1) shows a photograph of a thinly sliced frozen section of Example 17; FIG. 14(2) shows a photograph of a thinly sliced frozen section of Example 18; FIG. 14(3) shows a photograph of a thinly sliced frozen section of Example 19; FIG. 14(4) shows a photograph of a thinly sliced frozen section of Example 20; FIG. 14(5) shows a photograph of a thinly sliced frozen section of Example 21; FIG. 14(6) shows a photograph of a thinly sliced frozen section of Comparative Example 10; FIG. 14(7) shows a photograph of a thinly sliced frozen section of Comparative Example 11;

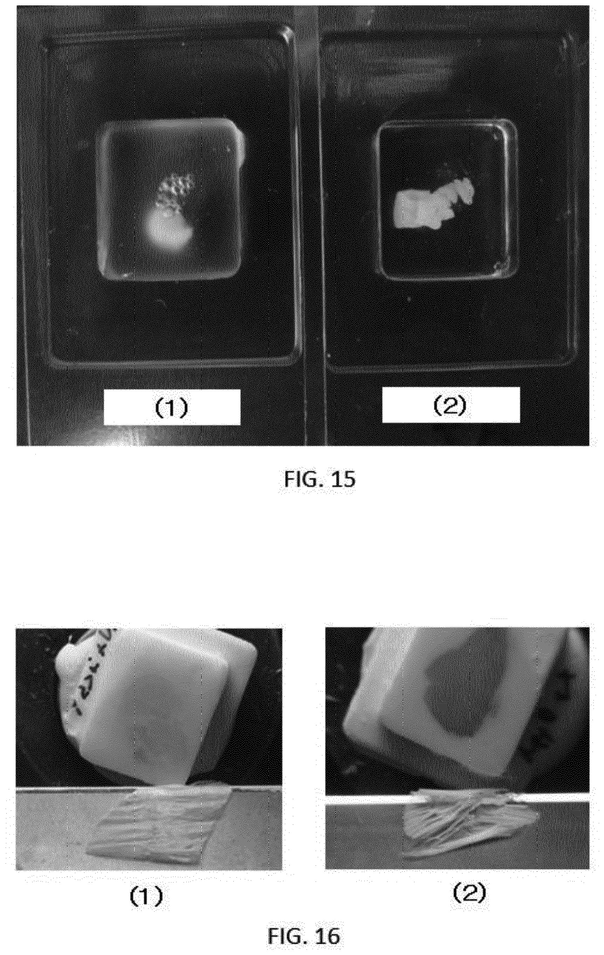

FIG. 15 shows a photograph substituted for a drawing. FIG. 15(1) shows a photograph of an unfrozen block in Comparative Example 11; FIG. 15(2) shows a photograph of an unfrozen block in Example 17;
FIG. 16 shows a photograph substituted for a drawing. FIG. 16(1) shows a photograph of a thinly sliced frozen section of Example 22; FIG. 16(2) shows a photograph of a thinly sliced frozen section of Comparative Example 12;

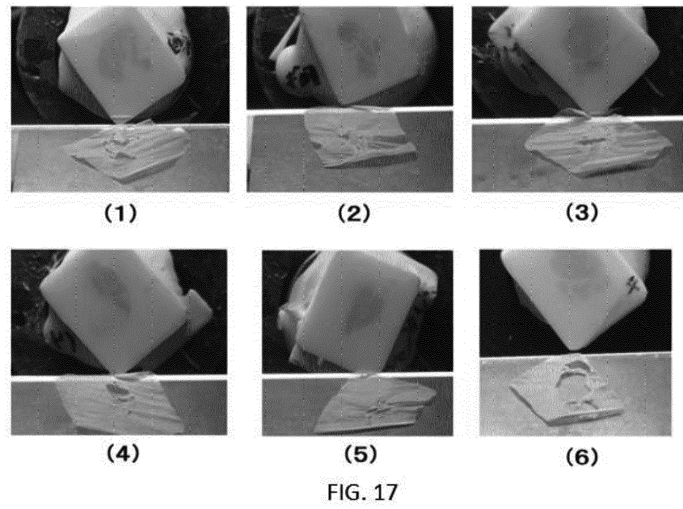

FIG. 17 shows a photograph substituted for a drawing. FIG. 17(1) shows a photograph of a thinly sliced frozen section of Reference Example 1; FIG. 17(2) shows a photograph of a thinly sliced frozen section of Reference Example 2; FIG. 17(3) shows a photograph of a thinly sliced frozen section of Reference Example 3; FIG. 17(4) shows a photograph of a thinly sliced frozen section of Reference Example 4; FIG. 17(5) shows a photograph of a thinly sliced frozen section of Reference Example 5; FIG. 17(6) shows a photograph of a thinly sliced frozen section of Reference Example 6.

### DESCRIPTION OF THE EMBODIMENTS

The embedding medium, method for preparing a curable base material nonpenetrating specimen, method for preparing a curable base material penetrating specimen, curable base material nonpenetrating specimen, thin slice performance improver for frozen embedding medium, and frozen embedding medium of the present invention are explained in detail below.

First of all, "curable base material" in the present invention means a material for permanently fixing a tissue so that the tissue on a specimen does not break down even with long-term storage. Examples include known materials such as paraffin, epoxy resin, methacrylate, alkali polyester, and the like.

Next, a "curable base material nonpenetrating specimen" means a specimen prepared without using the above "curable base material." Examples include specimens obtained by causing a tissue to have a hardness so as to permit thin slicing by curing a tissue by a known fixing solution such as formalin, paraformaldehyde, glutaraldehyde, or the like, curing a tissue by cooling/freezing, curing by preservation using a gelling agent such as gelatin-agarose or the like, and affixing the section obtained by thin-slicing to a support; representative examples include frozen specimens and microslicer specimens.

A "curable base material penetrating specimen" means a specimen that cures a tissue by causing a "curable base material" to penetrate to the interior of the tissue after defatting, dehydrating, or other such treatment of a fixed tissue fixed by the above fixing solution for permanent fixation so that the tissue on a specimen does not break down even with long-term storage. Paraffin specimens can be given as a representative example.

The gelatin used in the embedding medium of the present invention is not particularly restricted as long as it is in a liquid state at room temperature at the concentration (for example, 5 wt% aqueous solution concentration) used during embedding of a tissue specimen. Here, room temperature means the normal temperature of a pathology laboratory or laboratory (approximately 15-25°C). The embedding medium of the present invention may be an aqueous solution in which the gelatin has been dissolved in advance, or may be a powder containing gelatin that presents the above characteristics after being dissolved in water. In the case of a powder, the powder may be dissolved in water before embedding a tissue. The tissue is immersed in the aqueous solution obtained by dissolving the gelatin in water, fixed simply by being introduced into a container of ice or the like, and the gelatin solution liquefies when returned to room temperature. Therefore, the position and orientation of the tissue can be corrected any number of times when they differ from the desired during embedding without any thermal invasion of the tissue, and the operability can be improved. Furthermore, depending on the type of gelatin, the gelatin powder sometimes becomes lumpy without dissolving completely when dissolved in room temperature water. In this case, the gelatin may be dissolved in water of a temperature higher than room temperature, then cooled to room temperature. The cooled room temperature gelatin aqueous solution permits the tissue embedding operation because it does not solidify.

The low melting-point gelatin may be prepared by a known method. Examples include granulated amorphous gelatin obtained from the bones or skin of cows, pigs, or the like using a water-soluble substance as a binder (see Patent No. 3958909), gelatin raw material from fish dried in an amorphous molecular state without going through a gel state (see Japanese Unexamined Patent Application Publication No. 2008-104398), and the like.

As was mentioned above, the embedding medium of the present invention is not particularly restricted as long as it has a low melting point, but the handling of animal-derived materials has become strict in recent years due to biohazard relationships such as mad cow disease, foot and mouth disease, and the like. In addition, since gelatin from the bones and skin of animals has a relatively high melting point, treatment to lower the melting point is required, as was mentioned above. Gelatin from fish, however, has a lower melting point than that from animals, and gelatin from fish is also preferred from the viewpoint of biohazards.

With the embedding medium of the present invention, a curable base material nonpenetrating specimen can be prepared simply by embedding a tissue, freezing, and slicing thinly. However, a water-soluble substance may be added as needed. Examples include at least one water-soluble substance selected from the group comprising gelatin hydrolysates, amino acids and salts thereof, sugars, processed starches, sorbitan fatty acid esters, and sucrose fatty acid esters and water-soluble substances selected from the group comprising salts, extracts, vitamins, pH adjusters, dyes, and surfactants. Among these water-soluble substances, gelatin hydrolysates, amino acids and salts thereof, sugars, processed starches, sorbitan fatty acid esters, and sucrose fatty acid esters can adjust the gel strength, solubility, and meltability of the gelatin together with serving as binders when granulating the powdered amorphous gelatin.

To describe these water-soluble substances more specifically, examples include gelatin hydrolysates (for example, those obtained by decomposing collagen or gelatin to an average molecular weight of 500-15,000 using any one or more of an enzyme, acid, alkali, or heat); amino acids and salts thereof (for example, sodium L-aspartate, glycine, L-glutamic acid, sodium L-glutamate, L-lysine, L-lysine hydrochloride, etc.); sugars (for example, agarose, sucrose, sorbitol, maltitol, starch syrup, lactose, fructose, oligosaccharides, etc.); processed starches (for example, dextrins such as pyrodextrin, enzyme-modified dextrin, etc.); salts (for example, sodium chloride, calcium chloride, magnesium chloride, sodium sulfate, aluminum potassium sulfate, etc.); extracts (for example, extracts from cows, pigs, shellfish, vegetables, etc.); vitamins (for example, vitamin C, sodium ascorbate, vitamin B1 hydrochloride, etc.); pH adjusters (for example, citric acid, sodium citrate, succinic acid, phthalic acid, hydrochloric acid, sulfuric acid, acetic acid, malic acid, tartaric acid, etc.); dyes (for example, Red no. 2, no. 3, no. 102, no. 105, no. 106, Yellow no. 4, no. 5, Blue no. 2, etc.); surfactants (for example, sucrose fatty acid esters, sorbitan fatty acid esters, glycerin fatty acid esters, propylene glycol fatty acid esters, etc.). Each may be used individually or in combinations of two or more types.

The amount of these water-soluble substances used may be added as is appropriate within the range that does not harm the embedding effect of the gelatin. For example, when the water-soluble substance is a substance other than a surfactant, 2-50 wt% may be added per 100 parts by weight of the powdered amorphous gelatin; when the water-soluble substance is a surfactant, about 0.02-5 wt% may be added per 100 parts by weight of the powdered amorphous gelatin.

When a curable base material block is made from the tissue embedded using the embedding medium of the present invention and a curable base material penetrating specimen is prepared, it is preferable to add at least agarose as a water-soluble substance. The compatibility is good with no separation of the gelatin and tissue during fixation of the tissue by the fixing solution, but contraction is strong during alcohol dehydration and curing to a plastic-like state sometimes makes thin slicing difficult. The addition of agarose can suppress this contraction. The amount of agarose added is not particularly restricted as long as it is an amount that suppresses contraction.

The embedding medium of the present invention can be used alone to prepare a curable base material nonpenetrating specimens and curable base material penetrating specimens of tissues, but may be used in combination with known frozen embedding media. The combined method may be to embed the tissue by mixing the embedding medium and frozen embedding medium or to first embed the tissue by the embedding medium, then to again embed it by frozen embedding medium. The embedding step can be carried out at once when the tissue is embedded by mixing the embedding medium and frozen embedding medium. On the other hand, when the tissue is first embedded using the embedding medium, then again embedded by the frozen embedding medium, embedding by the frozen embedding medium can be performed while confirming the position of the tissue since the embedding medium is highly transparent. Since the gelatin from an animal protein is compatible with the tissue, either method makes it possible to prevent the development of wrinkles, tears, and the like in comparison to when thin slices are made by using a conventional frozen embedding medium alone.

Examples of commercially available frozen embedding media include O.C.T. compound (manufactured by Sakura Finetek), White Tissue Coat (manufactured by U-I Kasei), FSC22 (manufactured by Leica), CryoMount (low viscosity and high viscosity, manufactured by Muto Kagaku), Cryomatrix (Thermo Fisher Scientific), SCAM (Section-Lab), and the like. Polymers such as PVA, PEG, and the like may also be added as needed. The polymer makes it possible to adjust the hardness and the like of the tissue specimen, and contributes to the preservative/antimicrobial effect of the embedding medium. The amount of polymer used may be added as is appropriate within the range that does not harm the embedding effect of the gelatin.

The support is not particularly restricted as long as it the thinly sliced tissue section adheres thereto and examination by microscope can be performed. Examples include a slide glass, light-permeable resin film, and the like.

Examples of carboxylic acid compounds include formic acid, acetic acid, propionic acid, butyric acid, valeric acid, caproic acid, and other such monocarboxylic acid compounds; oxalic acid, malonic acid, succinic acid, glutaric acid, and other such dicarboxylic acid compounds; citric acid and other such tricarboxylic acid compounds; benzoic acid, phthalic acid, and other such aromatic carboxylic acid compounds; lactic acid, malic acid, and other such hydroxy acid compounds; chloroacetic acid and other such halogen-substituted carboxylic acid compounds; and the like. Furthermore, a carboxylic acid compound can improve the thin slice performance even when added to any of the gelatin, gelatin + known frozen embedding medium, and known frozen embedding medium. The amount of carboxylic acid compound used is not particularly restricted as long as it is an amount that improves the thin slice performance, and it may be adjusted as is appropriate in accordance with the type of embedding medium and carboxylic acid compound.

Figure 1 is a flow chart showing an example of the procedure for preparing and testing a curable base material nonpenetrating specimen and curable base material penetrating specimen of the present invention. The method for preparing a curable base material nonpenetrating specimen of the present invention includes a step for embedding a collected tissue by an embedding medium, a step for preparing a frozen block, a thin slicing step for obtaining a section by thin-slicing the frozen block, and an affixing step for affixing the section obtained to a support. The thinly sliced tissue is also stained in a staining step, and the collected tissue can be subjected to pathology testing by examination by microscope.

The concentration of the gelatin aqueous solution during the step for embedding the tissue by embedding medium differs depending on the origin of the gelatin that serves as the raw material of the embedding medium, but is not particularly restricted as long as it is a concentration that makes it possible to produce a gel from an aqueous solution of the embedding medium by cooling. For example, it may be about 0.5-10 wt% when the gelatin of the embedding medium is from cows or pigs, and about 1-30 wt% when the gelatin is from fish. The tissue may be embedded by introducing the collected tissue into an embedding medium (gelatin aqueous solution) in a cryomold or the like marketed as an embedding tray for preparing frozen sections. When using a powdered embedding medium (gelatin powder), a gelatin aqueous solution may be prepared by adding it to water to make the desired concentration in water of the room temperature of the room where the pathology testing will be conducted. Furthermore, when dissolution in water is difficult at room temperature, the embedding medium (gelatin powder) may be dissolved by being added to water heated to 40-60°C, then cooled to room temperature.

Furthermore, as was mentioned above, embedding of the tissue may be performed by embedding medium alone, but embedding may be performed using a mixture of embedding medium and known frozen embedding medium. The mixture ratio is not particularly restricted. The embedding medium and known frozen embedding medium may be mixed in advance, or prepared at the time of use. Embedding by a known frozen embedding medium may also be performed after embedding by the embedding medium.

The step for preparing a frozen block may be carried out by a known method. For example, the gelatin aqueous solution in the cryomold or the like may be frozen using dry ice or the like.

The thin slicing step for obtaining a section by thin-slicing the frozen block also may be carried out by a known method. Thin slicing may be performed using a low-temperature thin slicing device such as a cryostat microtome or the like.

The affixing step for affixing the section obtained to a support may also be carried out by a known method, and a curable base material nonpenetrating specimen can be prepared by affixing the thinly sliced section to the support. A specimen can also be prepared by affixing a floating section to the support by floating a thinly sliced section in a buffer or the like.

Furthermore, the procedure shown in Figure 1 first prepares a section thinly sliced from a frozen block, and affixes the section to a support. Nonetheless, there may be steps other than those shown in Figure 1 as long as a support having a thinly sliced tissue adhered thereto is obtained. For example, the support may be affixed to the frozen block first, and the frozen block then thinly sliced by inserting the blade of a thin sectioning device so as to be parallel to the support.

For pathology testing using the curable base material nonpenetrating specimen prepared, the gelatin attached to the support may be washed away by washing the curable base material nonpenetrating specimen by water of a temperature above the melting point of the gelatin as needed, and the specimen may be stained by a known staining method such as staining by HE stain, fat stain, or the like or by immunostaining by the enzyme antibody method (DAB), fluorescent antibody method, or the like, and examined by microscope.

The method for preparing a curable base material penetrating specimen of the present invention includes at least a step for fixing the frozen block by fixing solution, a dehydration/degreasing/curable base material penetration step, a step for preparing a curable base material block embedded by curable base material, a thin slicing step for obtaining a section by thin-slicing the curable base material block, and an affixing step for affixing the thin film obtained to a support. The thinly sliced tissue is also stained in a staining step, and the curable base material penetrating specimen of the collected tissue can be examined by examination by microscope.

In the step for fixing the frozen block by fixing solution, a known fixing solution such as 10% neutral buffered formalin solution or the like is cooled to a temperature that allows the frozen block to maintain a gel-like state without liquefying, and the frozen block may be immersed in the cooled fixing solution. Furthermore, the method for preparing a curable base material penetrating specimen of the present invention is characterized by the fact that the frozen block used in preparation of a curable base material nonpenetrating specimen can be fixed just by using gelatin as an embedding medium. Nonetheless, a curable base material penetrating specimen may be prepared directly from a tissue when a curable base material nonpenetrating specimen is not prepared. In this case, the tissue gelled by embedding by the embedding medium and cooling may be fixed by being dipped in cooled fixing solution. Since the gelatin embedding the tissue is also fixed by the fixing solution at this time, the convenience of handling in subsequent steps is improved since the gelatin does not liquefy even at normal temperature.

The dehydration/degreasing/curable base material penetration step may also be carried out by a known method. For example, the fixed tissue embedded by gelatin is dehydrated and degreased by xylene-alcohol or the like, and the curable base material may then penetrate the tissue by immersion in the curable base material.

In the step for preparing a curable base material block, a curable base material block can be prepared by embedding in a heated curable base material solution and cooling, after trimming the gelatin around the tissue as needed. Since the position can be changed while holding the fixed gelatin around the tissue using tweezers or the like during solidification of the curable base material solution in this step, the position in the curable base material block can be adjusted without damaging the tissue. When using a frozen block after having prepared a curable base material nonpenetrating specimen in particular, the position can be adjusted to permit thin slicing of the same plane as the slice plane of the curable base material nonpenetrating specimen.

A curable base material penetrating specimen can be prepared by conducting a step for obtaining a thinly sliced tissue affixed to a support after preparation of the curable base material block. In the same way as in the preparation of a curable base material nonpenetrating specimen, the curable base material block may be thinly sliced and the section obtained affixed to a support, or the curable base material block may be thinly sliced after affixing a support to the curable base material block.

When pathology testing is conducted using the curable base material penetrating specimen prepared, the specimen is stained by a known method such as staining by HE stain, PAS stain, Alcian blue stain, or the like or by immunostaining by the enzyme antibody method (DAB), fluorescent antibody method, or the like, and examined by microscope.

The embedding medium of the present invention has good compatibility with tissues since it uses gelatin derived from animals and can be used alone to prepare curable base material nonpenetrating specimens, but can also be utilized as a pre-embedding medium when preparing curable base material penetrating specimens. Therefore, although loss and damage have been problems with small tissues and soft tissues in the past in the curable base material penetrating specimen preparation process, these problems can be solved, and the medium can also be applied to cell block preparation of cytological specimens and the like by preparing a curable base material (non)penetrating specimen after pre-embedding blood, body cavity fluid, cultured cells, or the like.

Low melting-point gelatin can be used alone as an embedding medium, and can also be used as a thin slice performance improver for known frozen embedding media. Many frozen commercial embedding media are not derived from animal sources and have poor compatibility with tissues collected from the body. Wrinkles and tears therefore often develop in the thin film during thin slicing of the frozen block. The addition of low melting-point gelatin, however, improves compatibility without incurring thermal invasion of the tissue, and makes it possible to suppress the development of wrinkles and tears during thin slicing. The amount of thin slice performance improver added to the frozen embedding medium is not particularly restricted as long as it is an amount that can improve the thin slice performance, and can be adjusted as needed. As with the embedding medium, a water-soluble substance may also be added to the thin slice performance improver. In addition, a frozen embedding medium of improved thin slice performance may be provided by adding a thin slice performance improver in advance to a known frozen embedding medium. A carboxylic acid compound may also be added to further improve the performance of the thin slice performance improver.

The present invention is described specifically below through examples. The examples, however, are merely provided as references of specific embodiments to explain the present invention. These examples are intended to explain specific embodiments of the present invention, but in no way limit or restrict the scope of the invention disclosed in the specification.

### EXAMPLES

### [Preparation of a curable base material nonpenetrating specimen]

### <Example 1>

A gelatin aqueous solution was prepared by dissolving low melting-point gelatin from fish (Sigma-Aldrich gelatin from cold water fish skin G7041) in approximately 25°C water to make a concentration of approximately 20 wt%. One milliliter of the prepared gelatin aqueous solution was placed in a cryomold no. 3 (manufactured by Tissue Tech) and a 10% neutral buffered formalin-fixed intestine collected from a mouse was immersed (embedded) in the gelatin aqueous solution. Next, a frozen block of the intestine embedded by gelatin was prepared by freezing at -20°C in a cryostat. Thin slicing was then performed using a cryostat microtome (CM3050 manufactured by Leica), and a section approximately 5 µm thick was obtained. A curable base material nonpenetrating specimen was prepared by affixing the section obtained onto a slide glass by pressing. The gelatin on the slide glass was washed away by rinsing the curable base material nonpenetrating specimen obtained by tap water of around room temperature. Next, HE staining was performed using hematoxylin-eosin (manufactured by Merck). Furthermore, the cryostat microtome operation was carried out at a chamber temperature of -20°C and a sample temperature of -20°C; other operations were carried out at room temperature (approximately 25°C). Figure 2(1) shows a photograph of an unfrozen block of Example 1; Figure 2(4) shows a photograph of the curable base material nonpenetrating specimen after HE staining.

### <Comparative Example 1>

A curable base material nonpenetrating specimen was prepared by the same procedure as in Example 1, except that porcine gelatin (Sigma-Aldrich gelatin from porcine [sic] G1890) was used instead of gelatin from fish, the concentration was set at approximately 5 wt%, and it was used cooled to 37°C after being dissolved in 60°C water, and stained. Furthermore, the temperature was set at 37°C because the material gelled when cooled to room temperature and was difficult to handle. Figure 2(2) shows a photograph of an unfrozen block of Comparative Example 1; Figure 2(5) shows a photograph of the curable base material nonpenetrating specimen after HE staining.

### <Comparative Example 2>

A curable base material nonpenetrating specimen was prepared by the same procedure as in Example 1, except that bovine gelatin (Sigma-Aldrich gelatin from bovine skin G9391) was used instead of gelatin from fish, the concentration was set at approximately 5 wt%, and it was used cooled to 37°C after being dissolved in 60°C water, and stained. Furthermore, the temperature was set at 37°C because the material gelled when cooled to room temperature and was difficult to handle. Figure 2(3) shows a photograph of an unfrozen block of Comparative Example 2; Figure 2(6) shows a photograph of the curable base material nonpenetrating specimen after HE staining.

As shown in Figures 2(1)-(3), it could be adequately confirmed that the position of the embedded intestine was fixed even though the color of the gelatin during embedding differed due to differences in the raw material gelatin. In addition, as shown in Figure 2(4), only the intestine was HE stained in Example 1, but residue of the HE stain also remained around the intestine in addition to in the intestine in Comparative Example 1 shown in Figure 2(5) and in Comparative Example 2 shown in Figure 2(6). This is thought to be because of solidification on the room temperature slide glass due to the high melting point of the gelatin used in Comparative Examples 1 and 2. Of course, the gelatin on the slide glass can be washed away if the temperature during rinsing of the curable base material nonpenetrating specimen obtained is higher than the melting point of the gelatin, but this is undesirable as it complicates the operation. Based on the above results, a curable base material nonpenetrating specimen can be prepared regardless of the type of gelatin, but it was evident that the operability was better using gelatin that is in a liquid state at room temperature in consideration of residues on the curable base material nonpenetrating specimen and operability during examination by microscope.

### [Thermal invasion of tissue]

### <Example 2>

A curable base material nonpenetrating specimen was prepared by the same procedure as in Example 1, except that a mouse unfixed kidney was frozen using isopentane cooled by liquid nitrogen and fixed for one minute by formalin-ethanol mixed solution after being affixed to a slide glass instead of the 10% neutral buffered formalin-fixed intestine in Example 1, and stained. Figure 3(1) shows a photograph of the curable base material nonpenetrating specimen after HE staining prepared in Example 2 enlarged 400×.

### <Example 3>

A curable base material nonpenetrating specimen was prepared by the same procedure as in Example 2, except that MAX-F (manufactured by Nippi Co., Ltd.) having dextrin added to gelatin from fish was used instead of the gelatin in Example 2 and the concentration was set at approximately 5 wt%, and stained. Figure 3(2) shows a photograph of the curable base material nonpenetrating specimen after HE staining prepared in Example 3 enlarged 400×.

### <Comparative Example 3>

A curable base material nonpenetrating specimen was prepared by the same procedure as in Example 2, except that porcine gelatin (Sigma-Aldrich gelatin from porcine [sic] G1890) was used instead of the gelatin in Example 2, the concentration was set at approximately 5 wt%, and the specimen was immersed in gelatin solution dissolved in 60°C water, and stained. Figure 3(3) shows a photograph of the curable base material nonpenetrating specimen after HE staining prepared in Comparative Example 3 enlarged 400×.

### <Comparative Example 4>

A curable base material nonpenetrating specimen was prepared by the same procedure as in Example 2, except that O.C.T. compound (manufactured by Sakura Finetek) was used instead of the gelatin in Example 2, and stained. Figure 3(4) shows a photograph of the curable base material nonpenetrating specimen after HE staining prepared in Comparative Example 4 enlarged 400×.

As is evident from the photographs of Figures 3(1)-(4), the curable base material nonpenetrating specimens of Examples 2 and 3 in which mouse unfixed kidney was embedded at room temperature showed no major changes in the mouse unfixed kidney tissue in comparison to those embedded at room temperature using O.C.T. compound, which is a conventional frozen embedding medium. On the other hand, in Comparative Example 3 in which gelatin aqueous solution was prepared at 60°C and the mouse unfixed kidney embedded therein, vacuolation of the cytoplasm and nuclei was seen due to contraction of the tissue due to heating and the formation of ice crystals during freezing (arrow in Figure 3(3)). The residual gelatin was also stained by eosin (portion enclosed in a ○ in Figure 3(3)). Based on the above results, a curable base material nonpenetrating specimen can be prepared without thermal invasion of the tissue in the same way as with conventional frozen embedding media when low melting-point gelatin is used as the embedding medium.

### [Gelatin residue on curable base material nonpenetrating specimens]

The mouse unfixed kidney tissue margins of the curable base material nonpenetrating specimens prepared in Example 2, Example 3, and Comparative Example 4 were photographed, enlarged, and examined. Figure 4(1) shows photographs of the curable base material nonpenetrating specimen of Example 2 enlarged 200× and 1000×; Figure 4(2) shows photographs of the curable base material nonpenetrating specimen of Example 3 enlarged 200× and 1000; Figure 4(3) shows a photograph of the curable base material nonpenetrating specimen of Comparative Example 4 enlarged 200×.

Very slight gelatin residue was found on the margin of the mouse unfixed kidney tissue in Example 2. In Example 3 where dextrin was added to gelatin from fish, however, no gelatin remained on the tissue margin. Since gelatin is readily compatible with tissue because it is an animal protein, the gelatin that had entered the tissue is thought to have remained as a residue. In addition, the gelatin was derived from fish in Examples 2 and 3, but dextrin was added in Example 3. The addition of a water-soluble substance is thought to cause some type of interaction with the gelatin itself or the tissue, increasing the gelatin remaining on the tissue margin. On the other hand, when a curable base material nonpenetrating specimen was prepared by O.C.T. compound alone, the mouse unfixed kidney tissue margin peeled and bent without adhering tightly to the glass. Based on the above results, it is evident that the compatibility of the gelatin with the tissue is good and the tight adhesion of the tissue to the support improves due to the adhesion of the gelatin when a tissue is embedded using the embedding medium of the present invention, and that gelatin remains in the tissue and the margin thereof, making it possible to maintain the tight adhesion of the tissue even when the excess gelatin is washed away by running water after affixing the tissue to the support.

### [Improving the thin slice performance of conventional frozen embedding media]

### <Example 4>

A frozen block was prepared by the same procedure as in Example 1 except that MAX-F (manufactured by Nippi Co., Ltd.) dissolved in water to make a concentration of 10 wt% and an equal amount of O.C.T. compound (manufactured by Sakura Finetek) were poured into a cryomold, stirred for approximately one minute with a glass rod, and used as the embedding medium, and thinly sliced. Figure 5(1) shows a photograph of a thinly sliced frozen section. Figure 6(1) shows a photograph of a curable base material nonpenetrating specimen obtained by HE staining the thinly sliced frozen section by the same procedure as in Example 1.

### <Comparative Example 5>

Thin slicing was carried out by the same procedure as in Example 4 except that only O.C.T. compound was used. Figure 5(2) shows a photograph of a thinly sliced section. Figure 6(2) shows a photograph of a curable base material nonpenetrating specimen obtained by HE staining the thinly sliced section by the same procedure as in Example 1.

As shown in Figure 5(1), a smooth section with no tearing was obtained in Example 4 where low melting-point gelatin was added to a frozen embedding medium used in the past. On the other hand, the section in Comparative Example 5 that used only frozen embedding medium became wrinkled and torn. The curable base material nonpenetrating specimen obtained by affixing the section to a slide glass and staining also adhered cleanly to the slide glass without any peeling of the tissue in Example 4, as shown in Figure 6(1), but peeling of the mucosa was seen when only frozen embedding medium was used in Comparative Example 5, as shown in Figure 6(2). Based on the above results, it is evident that not only can low melting-point gelatin be used itself as an embedding medium, but can also be used as a thin slice performance improver for frozen embedding media used in the past and can provide a frozen embedding medium having improved thin slice performance.

### [Preparation of a curable base material penetrating specimen from a frozen block during preparation of a curable base material nonpenetrating specimen]

### <Example 5>

A frozen block was prepared by the same procedure as in Example 1 except that an aqueous solution cooled to room temperature after dissolving MAX-F (manufactured by Nippi Co., Ltd.) in 40°C water to make a concentration of 10 wt% was used as the embedding medium and a 10% neutral buffered formalin-fixed mouse fetus was used as the tissue, and a curable base material nonpenetrating specimen was then prepared. Figure 7(1) shows a photograph of the frozen block; Figure 7(2) shows a photograph of the HE-stained curable base material nonpenetrating specimen. Next, a block of formalin-fixed mouse fetus and gelatin was prepared by immersing the frozen block overnight in 10% neutral buffered formalin solution cooled to 4°C or lower. Figure 7(3) shows a photograph of the gelled block after formalin fixation photographed at room temperature (25°C). Next, a formalin-fixed block was prepared as follows using a vacuum automatic fixation-embedding device (VRX-22 manufactured by Sakura Seiki) in accordance with the ordinary paraffin block preparation procedure. The block after preparing a frozen section fixed in a gel-like state by formalin was placed in an embedding tray, dehydrated and degreased by alcohol (two hours each by 70, 80, and 90% ethanol, two hours each in three tanks of 99.5% ethanol), then xylene substituted (two hours each in three tanks of 100% xylene), immersed for two hours each in four tanks of paraffin dissolved at 60°C. The embedding tray was then filled with paraffin that had been dissolved by heating. The block after preparing a frozen section penetrated by paraffin therein was moved so that the same plane as the curable base material nonpenetrating specimen could be seen. After solidifying the paraffin by cooling, the paraffin block was removed from the embedding tray. Figure 7(4) shows a photograph of the paraffin block. Next, paraffin sections approximately 5 µm thick were prepared by a sliding microtome (SM2000R manufactured by Raica) and HE stained in the same way as in Example 1 after removing the paraffin by xylene and washing with running water. Figure 7(5) shows a photograph of the HE-stained curable base material penetrating specimen.

As is evident from Figures 7(1), (3), and (4), the orientation of the embedded mouse fetuses was the same. This was because MAX-F, which is an embedding medium containing low melting-point gelatin used in the examples is a liquid at room temperature, but made it possible to embed the fragile, breakable fetus margins by fixed gelatin by fixing the gelatin and mouse fetus by cooled formalin, as shown in Figure 7(3), which permitted paraffin embedding while adjusting the position of the mouse fetus by holding the gelatin with tweezers during paraffin block preparation. As described above, the use of the embedding medium of the present invention made it possible to prepare a curable base material penetrating specimen of the same plane as the curable base material nonpenetrating specimen from the frozen block used in curable base material nonpenetrating specimen preparation. Furthermore, the frozen block that used O.C.T. compound dissolved when immersed in formalin solution, and the tissue specimen washed out; subsequent processing was therefore abandoned.

### <Example 6>

Formalin fixation and paraffin block preparation were conducted by the same procedure as in Example 5 from the frozen block prepared in Example 4. Figure 8(1) shows a photograph of the block before formalin fixation and paraffin embedding prepared in Example 6; Figure 8(2) shows a photograph of the paraffin block. When a frozen block in which the tissue had been embedded by frozen embedding medium alone was immersed in formalin, the frozen embedding medium washed away in the formalin, resulting in a state of peeling of the tissue and making formalin fixation impossible. This example confirmed that a formalin-fixed block and paraffin block can be prepared from a frozen block used in preparation of a curable base material nonpenetrating specimen not only by the embedding medium alone but also when using an embedding medium that mixes a frozen embedding medium and low melting-point gelatin.

### [Preparation of a curable base material penetrating specimen using embedding medium with sugars added]

### <Example 7>

One milliliter of an aqueous solution obtained by dissolving MAX-F (manufactured by Nippi Co., Ltd.) in 40°C water to make a concentration of 10 wt% was cooled to room temperature and placed in a cryomold. A liver collected from a mouse was immersed (embedded) in the gelatin aqueous solution, then solidified by cooling on ice. Processing from formalin fixation onward was then performed by the same procedure as in Example 5, and a curable base material penetrating specimen was prepared. Figure 9(1) shows a photograph taken after formalin fixation; Figure 9(2) shows a photograph of the paraffin block; and Figure 9(3) shows a photograph of the HE-stained curable base material penetrating specimen.

As shown in Figure 9(3), it was possible to prepare a curable base material penetrating specimen using low melting-point gelatin, but the gelation portion fixed around the liver was also strongly stained by HE. In addition, the gelatin contracted and became plastic-like, making thin slicing difficult, when a paraffin block was prepared from the formalin-fixed block. Tissue examination by microscope was possible, but additives that would make it possible to improve the operability and lower the background of the HE stain were studied.

### <Examples 8-11 and Comparative Example 6>

MAX-F aqueous solution obtained by dissolving MAX-F in water to make a concentration of 5 wt%, agarose aqueous solution obtained by dissolving agarose (high quality agarose manufactured by Recenttec) in water to make a concentration of 0.5 wt%, and sucrose aqueous solution obtained by dissolving sucrose (manufactured by Wako) in water to make a concentration of 30 wt% were prepared and mixed in the proportions shown in Table 1 below.

**[Table 1]**

| | 0.5% Agarose | 5% MAX-F | 30% Sucrose added |
|---|---|---|---|
| Example 8 | 0 | 1 | - |
| Example 9 | 1 | 1 | - |
| Example 10 | 4 | 1 | - |
| Example 11 | 4 | 1 | + |
| Comparative Example 6 | 1 | 0 | - |

Next, HE-stained curable base material penetrating specimens of mouse intestine were prepared by the same procedure as in Example 7 except that 10% neutral buffered formalin-fixed mouse intestine and the aqueous solutions of Examples 8-11 and Comparative Example 6 were used. Figure 10 shows a photograph of the HE-stained curable base material penetrating specimens prepared in Examples 8-11 and Comparative Example 6. Comparative Example 6 was a method known in the past using agarose as a pre-embedding medium; there was no background of HE stain since gelatin was not used, but the intestinal tissue and agarose separated, and peeling and the like developed at the intestinal tissue margin. In addition, since agarose solidifies readily at room temperature, the operation had to be performed quickly, and the operability was poor. On the other hand, in Examples 8-11, the HE stain background lessened as the proportion of agarose increased, as is evident from the photographs in Figure 10, and the HE stain background similarly lessened when sucrose was added to the agarose as well. Additionally, as relates to thin slicing, in Examples 8-11 the cuttability improved in the stated order. Based on the above results, it was evident that the addition of agarose and sucrose lowers the HE stain background and can also improve the cuttability during thin slicing when preparing a curable base material penetrating specimen using low melting-point gelatin.

### [Preparation of a curable base material nonpenetrating specimen]

### <Example 12>

An unfrozen block and HE-stained curable base material nonpenetrating specimen were prepared by the same procedure as in Example 1 except that gelatin aqueous solution prepared by dissolving fish gelatin (Gelare Blanc: manufactured by Nitta Gelatin Co., Ltd.) by 50°C boiling water after swelling for 15 minutes by ion-exchanged water to make a concentration of approximately 1.5 wt% and cooled to around 25°C was used instead of the fish gelatin in Example 1. Figure 11(1) shows a photograph of the unfrozen block of Example 12; Figure 11(2) shows a photograph of the HE-stained curable base material nonpenetrating specimen. It was confirmed that the position of the embedded intestine was fixed in the same way as in Example 1 and that only the intestine was HE stained even when a different type of fish gelatin from Example 1 was used.

### [Addition of carboxylic acid compound to frozen embedding medium (only Gelare Blanc)]

### <Examples 13-15>

Embedding media were prepared by addition of 1 µL of acetic acid (manufactured by Wako) (Example 13), 0.1 µL of formic acid (manufactured by Wako) (Example 14), and 1 µL of 1 wt% citric acid (manufactured by Katayama Chemical Co., Ltd. and adjusted by purified water) (example 15), respectively, to 1 g of the gelatin aqueous solution prepared in Example 12. The pH was 4-5 after addition of the carboxylic acid compound. Next, the embedding medium was poured into a cryomold, a piece of chicken fat was immersed as a sample, and the medium was cooled using isopentane cooled by liquid nitrogen. Operation of the cryostat microtome was carried out at a chamber temperature of -20°C and a sample temperature of -35°C, close to the freezing temperature of adipose tissue; other operations were carried out at room temperature. Figure 12(1) shows a photograph of the thinly sliced frozen section of Example 13; Figure 12(2) shows a photograph of the thinly sliced frozen section of Example 14; and Figure 12(3) shows a photograph of the thinly sliced frozen section of Example 15.

### <Comparative Examples 7 and 8>

Comparative Example 7 added 0.1 µL of 6N hydrochloric acid (6 mol/L, manufactured by Sigma-Aldrich) instead of the acetic acid in Example 13; Comparative Example 8 did not add the acetic acid of Example 13. Figure 12(4) shows a photograph of the thinly sliced frozen section of Comparative Example 7; Figure 12(5) shows a photograph of the thinly sliced frozen section of Comparative Example 8.

As shown in Figure 12(5), the base material hardened, became brittle, and broke at -35°C when only gelatin (Gelare Blanc) aqueous solution was used, and thin slicing of the adipose tissue itself was difficult. On the other hand, as shown in Figures 12(1)-(3), addition of a carboxylic acid compound to the gelatin (Gelare Blanc) aqueous solution greatly improved the thin slice performance of the frozen block. Furthermore, as shown in Figure 12(4), the thin slice performance also improved slightly, although less than by a carboxylic acid compound, when hydrochloric acid was added. This made it evident that it is preferable to set the pH to the acidic side (4-5) when the embedding medium is lowered to a temperature for obtaining frozen sections of adipose tissue, and that addition of a carboxylic acid compound, especially acetic acid, is preferable.

### [Addition of carboxylic acid compound to frozen embedding medium (MAX-F alone)]

### <Example 16>

A frozen section was prepared by the same procedure as in Example 13 except that gelatin (MAX-F) having a concentration of 5 wt% was used instead of the gelatin (Gelare Blanc) of Example 13. Figure 13(1) shows a photograph of a thinly sliced frozen section of Example 16.

### <Comparative Example 9>

A frozen section was prepared by the same procedure as in Example 16 except that acetic acid was not added. Figure 13(2) shows a photograph of a thinly sliced frozen section of Comparative Example 9.

As is evident from Figures 13(1) and (2), it was clarified that addition of a carboxylic acid compound improves the thin slice performance of the frozen block even when MAX-F is used as the gelatin.

### [Addition of carboxylic acid compound to frozen embedding medium (Gelare Blanc + O.C.T.)]

### <Examples 17-21>

Gelatin aqueous solution was prepared by the same procedure as in Example 12 except that the concentration of Gelare Blanc was set at 3 wt%. Next, 35 µL of acetic acid (example 17), 1 µL of formic acid (Example 18), 15 µL of 1 wt% citric acid (Example 19), 1 µL of 1 wt% oxalic acid (manufactured by Katayama Chemical Co., Ltd. and adjusted by purified water) (Example 20), or 2 µL of 1 wt% trichloroacetic acid (manufactured by Sigma-Aldrich and adjusted by purified water) (Example 21) was added to 1 g of a 1:3 mixture of gelatin aqueous solution and O.C.T. compound to make an embedding medium. Unless otherwise noted, the manufacturer of the carboxylic acid compound is the same as above. Next, frozen sections of pieces of chicken fat were prepared by the same procedure as in Example 13 using the embedding media prepared. Figure 14(1) shows a photograph of a thinly sliced frozen section of Example 17; Figure 14(2) shows a photograph of a thinly sliced frozen section of Example 18; Figure 14(3) shows a photograph of a thinly sliced frozen section of Example 19; Figure 14(4) shows a photograph of a thinly sliced frozen section of Example 20; and Figure 14(5) shows a photograph of a thinly sliced frozen section of Example 21.

### <Comparative Examples 10 and 11>

Comparative Example 10 added 0.1 µL of 6N hydrochloric acid instead of the acetic acid in Example 17; Comparative Example 11 did not add the acetic acid of Example 17. Figure 14(6) shows a photograph of a thinly sliced frozen section of Comparative Example 10; Figure 14(7) shows a photograph of a thinly sliced frozen section of Comparative Example 11.

As shown in Figure 14(7), the base material hardened, became brittle, and broke at -35°C in Comparative Example 11 in which no carboxylic acid compound was added to the gelatin (Gelare Blanc) + O.C.T. compound. The adipose tissue piece also came off, and thin slicing of the adipose tissue was difficult. On the other hand, as shown in Figures 14(1)-(5), addition of a carboxylic acid compound to the gelatin (Gelare Blanc) + O.C.T. compound greatly improved the thin slice performance of the frozen block. Furthermore, as shown in Figure 14(6), unlike Comparative Example 7, frozen sections not inferior to Examples 17-21 were obtained when hydrochloric acid was added to the gelatin (Gelare Blanc) + O.C.T. compound. Based on the above results, it is evident that it is preferable to set the pH to the acidic side (4-5) in the same way as with an embedding medium of gelatin alone when using an embedding medium that is a mixture of gelatin + O.C.T., which is a frozen embedding medium, and that addition of a carboxylic acid compound, especially acetic acid, is preferable.

Figure 15(1) shows a photograph of the unfrozen block of Comparative Example 11; Figure 15(2) shows a photograph of the unfrozen block of Example 17. It is evident that addition of a carboxylic acid compound made the embedding medium transparent, that is, solubilized the embedding medium component. Based on the above results, it was evident that addition of a carboxylic acid compound to an embedding medium that is a mixture of low melting-point gelatin and commercial frozen embedding medium increases the transparency of the unfrozen block and therefore makes it easier to confirm the position of the tissue and improves the operability during frozen specimen preparation. In addition, the improvement of the thin slice performance of the frozen sections due to addition of a carboxylic acid compound is thought to occur because the embedding medium component penetrates to the finer parts of the tissue due to solubilization of the embedding medium component.

### [Addition of carboxylic acid compound to frozen embedding medium (MAX-F + O.C.T.)]

### <Example 22>

A frozen section was prepared by the same procedure as in Example 17 except that gelatin (MAX-F) aqueous solution having a concentration of 7 wt% and O.C.T. compound were mixed in a 1:1 ratio. Figure 16(1) shows a photograph of a thinly sliced frozen section of Example 22.

### <Comparative Example 12>

A frozen section was prepared by the same procedure as in Example 22 except that acetic acid was not added. Figure 16(2) shows a photograph of a thinly sliced frozen section of Comparative Example 12.

As is evident from Figures 16(1) and (2), it became clear that addition of a carboxylic acid compound improves the thin slice performance of the frozen block even when a mixture of MAX-F and O.C.T. compound is used as the embedding medium.

### [Addition of carboxylic acid compound to O.C.T. compound]

### <Reference Examples 1-6>

The embedding media of Reference Examples 1-5 were prepared by adding 35 µL of acetic acid (Reference Example 1), 0.1 µL of formic acid (Reference Example 2), 1 µL of 1 wt% citric acid (Reference Example 3), 2 µL of 1 wt% trichloroacetic acid (Reference Example 4), and 1 µL of 6N hydrochloric acid (Reference Example 5) to O.C.T. compound (pH 8). Furthermore, the carboxylic acid compounds are the same as above. The pH was 4-5. In addition, O.C.T. compound with no carboxylic acid compound added served as Reference Example 6. Next, frozen sections were prepared by the same procedure as in Example 13. Figure 17(1) shows a photograph of a thinly sliced frozen section of Reference Example 1; Figure 17(2) shows a photograph of a thinly sliced frozen section of Reference Example 2; Figure 17(3) shows a photograph of a thinly sliced frozen section of Reference Example 3; Figure 17(4) shows a photograph of a thinly sliced frozen section of Reference Example 4; Figure 17(5) shows a photograph of a thinly sliced frozen section of Reference Example 5; and Figure 17(6) shows a photograph of a thinly sliced frozen section of Reference Example 6. As is evident from Figure 17(6), the adipose tissue scraped off in a powder and did not leave a shape in Reference Example 6 that used O.C.T. compound alone. On the other hand, the base material became flexible and the thin slice performance improved in Reference Examples 1-5 in which a carboxylic acid compound or hydrochloric acid was added. Based on the above results, it was evident that setting the pH of the frozen embedding medium on the acidic side (4-5) improves the thin slice performance even when an ordinary frozen embedding medium is lowered to a temperature for obtaining frozen sections of adipose tissue, and that addition of a carboxylic acid compound, especially acetic acid, is preferable.

### INDUSTRIAL APPLICABILITY

The use of an embedding medium for specimen preparation of the present invention incurs no thermal invasion of the tissue, minimizes wrinkling and tearing during thin slicing, and makes it possible to confirm the position of the tissue in the embedding medium when preparing a curable base material nonpenetrating specimen, and makes it possible to prepare a curable base material penetrating specimen on the same plane as a curable base material nonpenetrating specimen. In addition, cell blocks of cytological specimens such as blood, body cavity fluids, and the like and cultured cells can also be prepared. Therefore, it is useful in the preparation of curable base material nonpenetrating specimens and curable base material penetrating specimens not only for rapid pathological diagnoses during surgery but also in research facilities such as medical institutions and university medical departments, general hospitals, and the like.

## Claims

1. An embedding medium for specimen preparation including gelatin that is in a liquid state at 15°C-25°C and assumes a solid state at 4°C when made into an aqueous solution.

2. The embedding medium for specimen preparation according to Claim 1 wherein the gelatin is derived from fish.

3. The embedding medium for specimen preparation according to Claims 1 or 2 including at least one water-soluble substance selected from the group comprising gelatin hydrolysates, amino acids and salts thereof, sugars, processed starches, sorbitan fatty acid esters, and sucrose fatty acid esters.

4. The embedding medium for specimen preparation according to Claim 3 wherein the water-soluble substance includes at least sugars.

5. The embedding medium for specimen preparation according to Claim 3 wherein the water-soluble substance is agarose.

6. The embedding medium for specimen preparation according to Claim 3 wherein the water-soluble substance is dextrin.

7. The embedding medium for specimen preparation according to any of Claims 1-6 that also includes a frozen embedding medium.

8. The embedding medium for specimen preparation according to any of Claims 1-7 that also includes a carboxylic acid compound.

9. A method for preparing a curable base material nonpenetrating specimen including:
a step for embedding a tissue using the embedding medium for specimen preparation according to any of Claims 1-8,
a step for preparing a frozen block by freezing the tissue embedded using the embedding medium for specimen preparation, and
a step for thin-slicing the frozen block and obtaining a support to which the thinly sliced tissue is affixed.

10. The method for preparing a curable base material nonpenetrating specimen according to Claim 9 that includes a staining step for staining the tissue after the step for obtaining a support to which the thinly sliced tissue is affixed.

11. A method for preparing a curable base material nonpenetrating specimen including:
a step for embedding a tissue using the embedding medium for specimen preparation according to any of Claims 1-8,
a step for preparing a solidified block by cooling a tissue embedded using the embedding medium for specimen preparation,
a step for preparing a fixed block by immersing the block in a fixing solution,
a step for thin-slicing the fixed block and obtaining a support to which the thinly sliced tissue is affixed.

12. The method for preparing a curable base material nonpenetrating specimen according to Claim 11 that includes a staining step for staining the tissue after the step for thin-slicing the fixed block and obtaining a support to which the thinly sliced tissue is affixed.

13. A method for preparing a curable base material penetrating specimen including:
a step for embedding a tissue using the embedding medium for specimen preparation according to any of Claims 1-8,
a step for preparing a solidified block by cooling the tissue embedded using the embedding medium for specimen preparation,
a step for preparing a fixed block by immersing the block in a fixing solution,
a step for preparing a curable base material block having the fixed block embedded using a curable base material,
a step for thin-slicing the curable base material block and obtaining a support to which the thinly sliced tissue is affixed.

14. The method for preparing a curable base material penetrating specimen according to Claim 13 that includes a staining step for staining the tissue after the step for thin-slicing the curable base material block and obtaining a support to which the thinly sliced tissue is affixed.

15. The method for preparing a curable base material penetrating specimen according to Claims 13 or 14 wherein the block is a frozen block prepared when preparing a curable base material nonpenetrating specimen.

16. The method for preparing a curable base material penetrating specimen according to any of Claims 13-15 wherein the step for preparing a curable base material block having the fixed block embedded using a curable base material prepares a curable base material block by cooling the curable base material while adjusting the position of the fixed block in the melted curable base material.

17. A curable base material nonpenetrating specimen including gelatin that is in a liquid state at 15°C-25°C and assumes a solid state at 4°C when made into an aqueous solution.

18. A thin slice performance improver for a frozen embedding medium that includes gelatin that is in a liquid state at 15°C-25°C and assumes a solid state at 4°C when made into an aqueous solution.

19. The thin slice performance improver according to Claim 18 that also includes a carboxylic acid compound.

20. A frozen embedding medium that includes the thin slice performance improver according to Claims 18 or 19.
